# EUROPEAN PATENT SPECIFICATION

(11) **EP 4 008 539 B1**
(45) Date of publication and mention of the grant of the patent: **09.07.2025**
(21) Application number: 21208631.8
(22) Date of filing: 16.11.2021
(51) Int. Cl.: B29D 30/02, B29C 33/30, B60C 7/14

(54) **SYSTEM AND METHOD FOR MANUFACTURING A SUPPORT STRUCTURE**
SYSTEM UND VERFAHREN ZUR HERSTELLUNG EINER STÜTZSTRUKTUR
SYSTÈME ET PROCÉDÉ DE FABRICATION D'UNE STRUCTURE DE SUPPORT

(30) Priority: 02.12.2020 US 202017109901
(43) Date of publication of application: 08.06.2022
(73) Proprietor: The Goodyear Tire & Rubber Company, Akron, OH 44316 (US)
(72) Inventor: CELIK, Ceyhan, Stow, 44224 (US); EDWARDS, Steven Amos, Akron, 44313 (US); DEEM, Michael Scott, Kent, 44240 (US); HOGAN, Michael James, Tallmadge, 44278 (US); GOPALA, Arun Kumar Byatarayanapura, Copley, 44321 (US); STOILA, George Michael, Tallmadge, 44278 (US); BENZING, James Alfred, II, North Canton, 44720 (US)
(74) Representative: Kutsch, Bernd

(56) References cited:
- EP-A1- 3 321 100
- WO-A1-2018/200142
- US-A1- 2015 034 225
- US-A1- 2019 299 709

## Description

### Field of Invention

The present invention relates to wheel/tire assemblies, and more particularly, to a system and a method for manufacturing non-pneumatic wheel/tire assemblies.

### Background of the Invention

Radial pneumatic tires rely on the ply reinforcement to carry and transfer the load between the rim and the belt layer. These ply cords need to be tensioned to carry the load. Tensioning of these ply cords is achieved with the pressurized air in the inner chamber of the tire. If air pressure is lost, load carrying capacity of a pneumatic tire decreases significantly. Preventing the slow or sudden air pressure loss has been a challenge for the tire makers. One proposed solution is to use non-pneumatic tires. A top loader non-pneumatic tire can perform similar to a pneumatic tire if its durability, speed rating/limit and load capacity can be increased to the levels of a pneumatic tire.

Many top loader non-pneumatic tires rely on the polymeric spokes to carry the load of the vehicle. Spokes transfer the load from the rim to the shear band. Due to the characteristics of the polymeric materials used in the spokes of these tires, performance of these tires is limited. It is an object of the present invention to overcome this limitation and increase the load carrying capacity and durability of these spokes and hence the performance of the top loader non-pneumatic tire.

EP 3 321 100 A1 describes a system and method of manufacturing a non-pneumatic support structure. The system comprises a core having a cylindrical hub and radially protruding extensions, a plurality of internal arcuate members for positioning a reinforcing layer about the core, a first side plate for securing the internal arcuate members in place relative to the core, and a second side plate for securing the core and the internal arcuate members to each other.

US 2015/0034225 A1 describes a reinforced non-pneumatic tire and a system for molding such a tire. WO 2018/200142 A1 discloses a non-pneumatic tire with spokes.

### Definitions

"Axial" and "axially" refer to lines or directions that are parallel to the axis of rotation of the tire.

"Circumferential" and "circumferentially" mean lines or directions extending along the perimeter of the surface of the annular tire parallel to the equatorial plane (EP) and perpendicular to the axial direction.

"Lateral" means an axial direction.

"Radial" and "radially" mean directions radially toward or away from the axis of rotation of the tire.

"Wheel" or "hub" means a structure for supporting the tire and mounting to the vehicle axle.

### Summary of the Invention

The invention relates to a system in accordance with claim 1 and to a method in accordance with claim 8.

Dependent claims refer to preferred embodiments of the invention.

A system in accordance with a preferred aspect of the present invention cures and manufactures a partially cured tire assembly. The system includes an annular hub member slid into a corresponding annular, radially inner surface of the partially-cured tire assembly, a plurality of elongate spacer members for maintaining corresponding uniform cavity dimensions in the partially-cured tire assembly tire assembly by fastening the spacer members to the hub member with flap members of the partially-cured tire assembly tire assembly thereby enclosing a radially outermost surface of each of the spacer members, a first annular curing platen for axially securing the hub member and spacer members relative to each other, a second annular curing platen for axially securing the hub member and spacer members relative to each other; and a plurality of elongate inserts for creating a smooth, uniform outer cylindrical surface formed by a radially outer surface of each insert and flap members of the tire assembly positioned by the radially outermost surfaces of the spacer members.

According to a preferred aspect of the system, a plurality of mold members is placed circumferentially around a radially outer surface of a tread member.

According to a preferred aspect of the system, radially inner surfaces of the mold members together form a tread shaped outer surface in the radially outer surface of the tread member.

According to a preferred aspect of the system, the spacer members, first and second curing platens, triangular inserts, and mold members are heated in order to cure form the flap members, a shear band, and a tread member into a molded integral part of a complete, cured tire assembly.

According to a preferred aspect of the system, the elongate inserts have a triangular cross-section.

According to a preferred aspect of the system, the mold members are radially removable from around the complete, cured tire assembly.

According to a preferred aspect of the system, the curing platens are axially removable from the hub member, the elongate spacer members, and elongate inserts.

According to a preferred aspect of the system, the curing platens are heated by a hot liquid.

According to a preferred aspect of the system, the elongate spacer members platens are heated by steam.

According to a preferred aspect of the system, the elongate inserts are heated by electricity.

A method in accordance with a preferred aspect of the present invention completes the curing of a partially cured tire assembly. The method includes the steps of: sliding an annular hub member into a corresponding annular, radially inner surface of the partially-cured tire assembly; maintaining a plurality of spacer members within corresponding uniform cavities in the partially-cured tire assembly; fastening the spacer members to the hub member with uncured flap members of the partially-cured tire assembly enclosing a radially outermost surface of each of the spacer members; axially securing first and second curing platens, the hub member, and spacer members relative to each other; and creating a smooth, uniform outer cylindrical surface formed by a radially outer surface of each spacer member and each of the uncured flap members of the partially-cured tire assembly positioned by the radially outermost surfaces of the spacer members.

According to a preferred aspect of the method, a further step includes serially placing an uncured inner annular shear band and an uncured outer annular tread member of the partially cured tire assembly circumferentially around the uniform outer cylindrical surface.

According to a preferred aspect of the method, a further step includes affixing the uncured inner annular shear band and the uncured outer annular tread member of the partially cured tire assembly to each other.

According to a preferred aspect of the method, a further step includes placing a plurality of mold members circumferentially around a radially outer surface of the tread member.

According to a preferred aspect of the method, a further step includes forming a tread shaped outer surface in the outer surface of the tread member by radially inner surfaces of the mold members.

According to a preferred aspect of the method, a further step includes heating the spacer members, curing platens, elongate inserts, and mold members in order to form the flap members, shear band, and tread member into a fully cured tire assembly.

According to a preferred aspect of the method, a further step includes radially removing the mold members from around the fully cured tire assembly.

According to a preferred aspect of the method, a further step includes axially removing the curing platens from the hub member.

According to a preferred aspect of the method, a further step includes axially withdrawing the spacer members and inserts from the fully cured tire assembly to reveal stable cavities within a spoke structure of a rim-mountable, fully cured tire assembly.

According to a preferred aspect of the method, the heating step includes a medium from the group consisting of a hot liquid, steam, and electricity.

### Brief Description of the Drawings

The present invention will be more clearly understood by the following description of some examples thereof, with reference to the accompanying drawings, in which:
FIG. 1 is a schematic perspective view of a part of an example wheel/tire assembly in accordance with the present invention;
FIG. 2 is another schematic perspective view of part of the assembly of FIG. 1;
FIG. 3 is a schematic perspective view of another part of the assembly of FIG. 1;
FIG. 4 is a schematic perspective view of yet another part of the assembly of FIG. 1;
FIG. 5 is a schematic perspective view of still another part of the assembly of FIG. 1;
FIG. 6 is a schematic perspective view of yet another part of the assembly of FIG. 1;
FIG. 7 is a schematic perspective view of still another part of the assembly of FIG. 1;
FIG. 8 is a schematic perspective view of yet another part of the assembly of FIG. 1;
FIG. 9 is an exploded schematic perspective view of still another part of the assembly of FIG. 1;
FIG. 10 is a schematic perspective view of yet another part of the assembly of FIG. 1;
FIG. 11 is a schematic perspective view of still another part of the assembly of FIG. 1;
FIG. 12 is a schematic perspective view of yet another part of the assembly of FIG. 1;
FIG. 13 is a schematic perspective view of still another part of the assembly of FIG. 1;
FIG. 14 is a schematic perspective view of yet another part of the assembly of FIG. 1;
FIG. 15 is a schematic perspective view of still another part of the assembly of FIG. 1;
FIG. 16 is a schematic perspective view of yet another part of the assembly of FIG. 1;
FIG. 17 is a schematic perspective view of still another part of the assembly of FIG. 1;
FIG. 18 is an exploded schematic perspective view of yet another part of the assembly of FIG. 1;
FIG. 19 is a schematic perspective view of still another part of the assembly of FIG. 1;
FIG. 20 is a schematic perspective view of yet another part of the assembly of FIG. 1;
FIG. 21 is a schematic perspective view of still another part of the assembly of FIG. 1; and
FIG. 22 is a schematic flow chart of an example method in accordance with the present invention.

### Description of Preferred Embodiments of the Present Invention

A conventional wheel/tire assembly may have an outer ring, such as a shear band, flexibly connected to a central hub by means of lightweight composite springs. The springs may be plates fixed to the ring and to the hub. The hub may contain a speed reduction gear unit and/or an electric motor and may have a suspension mechanism for connecting a vehicle chassis to each wheel. The ring may be constructed from a flexible composite material, such as carbon fiber reinforced nylon material and have twin rubber tires and a plurality of circumferentially spaced-apart radial cleats which engage the ground and provide improved traction. The hub may also be formed from a carbon fiber reinforced composite material. Another conventional wheel may have a rubber strip with a molded tread bonded to a composite ring for improved grip. Further, the springs interconnecting the ring and hub may be S-shaped lightweight composite springs.

Another conventional wheel/tire assembly may be formed from a lightweight composite material, such as carbon fiber reinforced polyamide. The assembly may have a cylindrical central hub and a circular outer flexible rim mounted on the central hub by an endless looped spring band extending between the central hub and the circular rim. Six radial loops may be defined by the spring band. The spring band may be attached to the central hub and to the circular rim by any suitable means, such as adhesion, cohesion, soldering and/or mechanical fixing by means of bolts, rivets, and/or clamps.

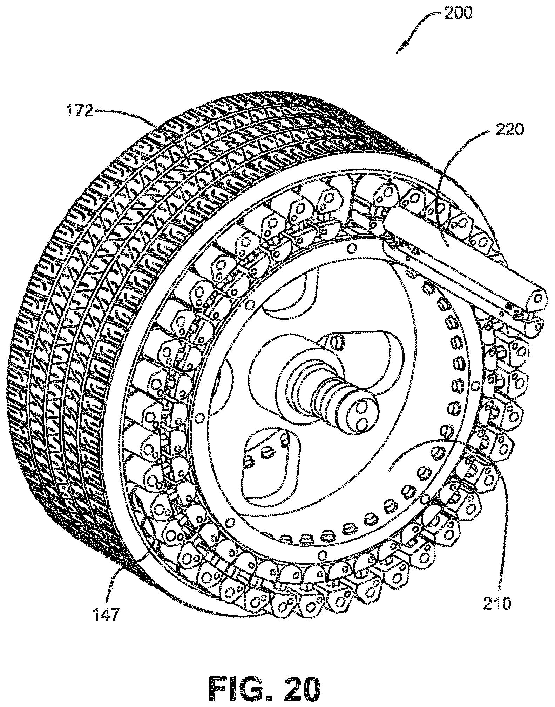

As shown in FIGS. 20-21, an example tire assembly, such as that described in US-B-10,207,544, may be formed from a lightweight polymer material, such as, for example, a standard tire rubber compound, a thermoplastic polymer, polyethylene terephthalate (PET), polyether ether ketone (PEEK), a cross-linking polymer like natural rubber, synthetic rubber-like polymers, epoxy resins, and/or phenolic resins. The assembly may have an inner central rim, such as an automobile wheel (not shown), and a circular outer flexible ring, which may include a shear band and tread structure, mounted on the inner central rim by a continuous cord/fabric reinforced spoke structure extending between the inner central rim and the outer ring.

The spoke structure may define a plurality of cavities disposed concentrically about the inner central rim allowing the spoke structure to deflect under load thereby defining a suitable balance between flexibility for ride comfort and traction within a footprint of the assembly and stiffness for vehicle handling, low rolling resistance, and low heat build-up within the spoke structure. The cavities of the spoke structure may further define openings for arms of the inner central rim to extend therethrough and secure the spoke structure to the inner central rim. The arms may engage portions in a mechanical interlocking arrangement. The inner central rim may further include plates that, along with the arms may sandwich the portions of the spoke structure and create a further frictional and/or adhesive securement between the inner central rim and the spoke structure. The spoke structure may comprise a homogenous or heterogeneous polymer and/or a filled polymer.

Spokes of the spoke structure may be curved inwardly or outwardly for mitigating or enhancing buckling of the spokes. The spokes may include one or more reinforcing layers. The layer(s) may be constructed of single end dipped cords, conventional pneumatic tire ply/cord arrangements, short fibers, and/or polymeric film. Further, these constructions may be PET, nylon 6, nylon 6,6, rayon, steel, glass fibers, carbon fiber, aramid, and/or a hybrid construction of these materials. The cords may be from 400 denier to 9000 denier. The polymeric film may be from 0.1 mm to 2.0 mm thick. The spokes may be oriented at angle between 0 degrees and 90 degrees. The reinforcement of the spokes may be continuously reinforced across their entire axial length. Continuous reinforcement layer(s) may extend radially outward to multiple locations adjacent to a shear band at the outer flexible ring.

Each cavity may have a common cross-sectional profile about the axis of rotation of the assembly. Further, each cavity may have a common axial length equal to a uniform axial thickness of the spoke structure. Each cavity may be curvedly shaped to prevent "pinch" points on the reinforcement layer(s) and mitigate compressive stress concentrations on the reinforcement layer(s). The number of cavities may be between 2 and 60 for large scale tire assemblies. The inner central rim may include steel, cast iron, aluminum, aluminum alloys, magnesium allows, and/or iron alloys.

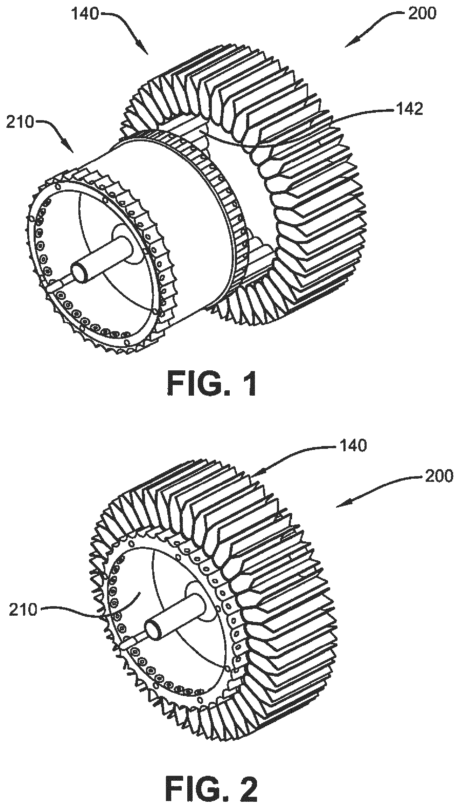

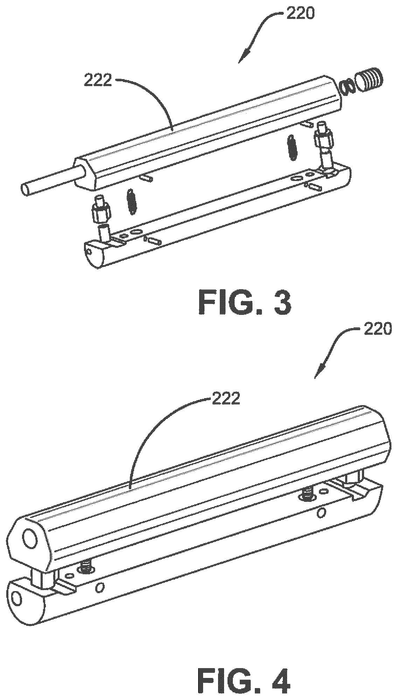

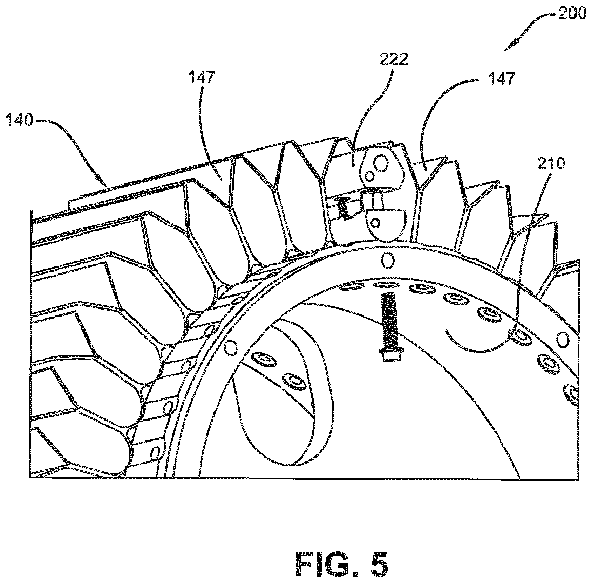

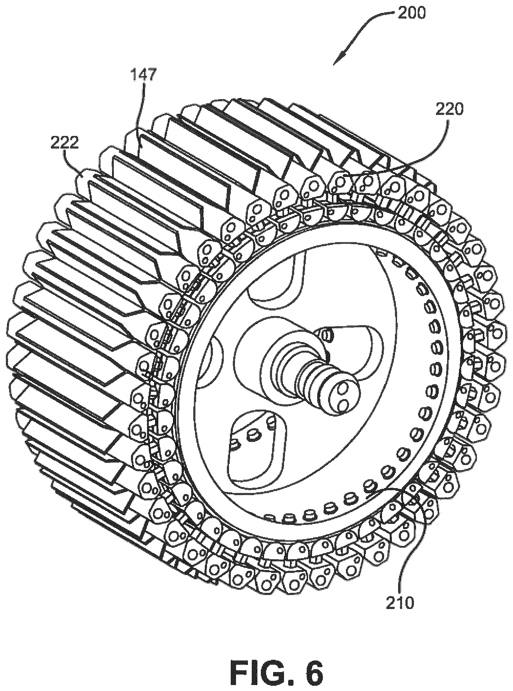

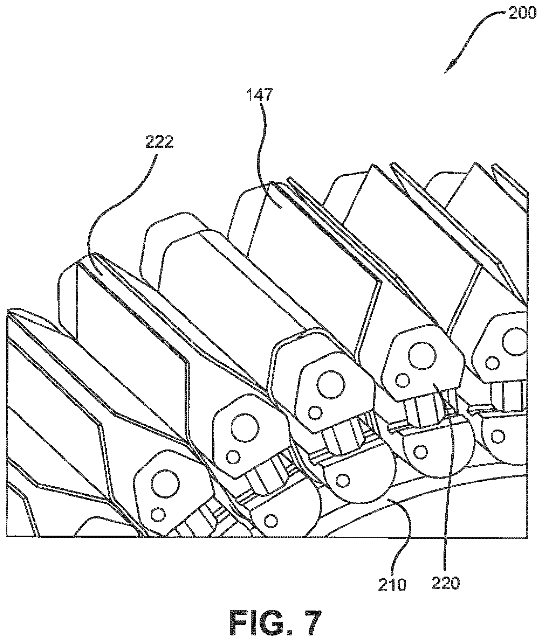

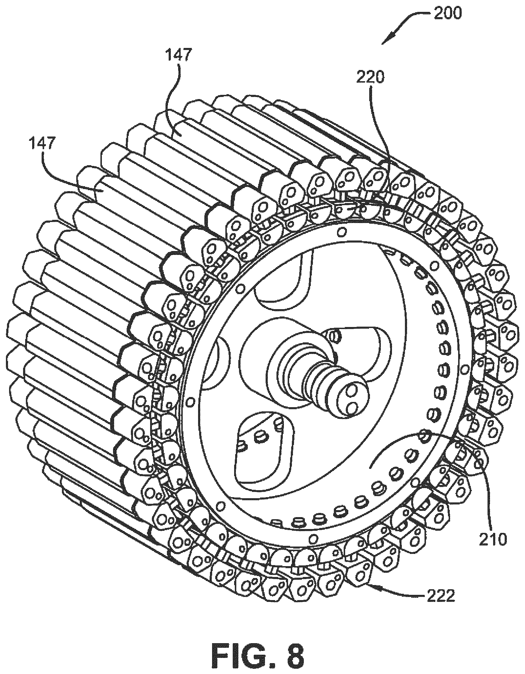

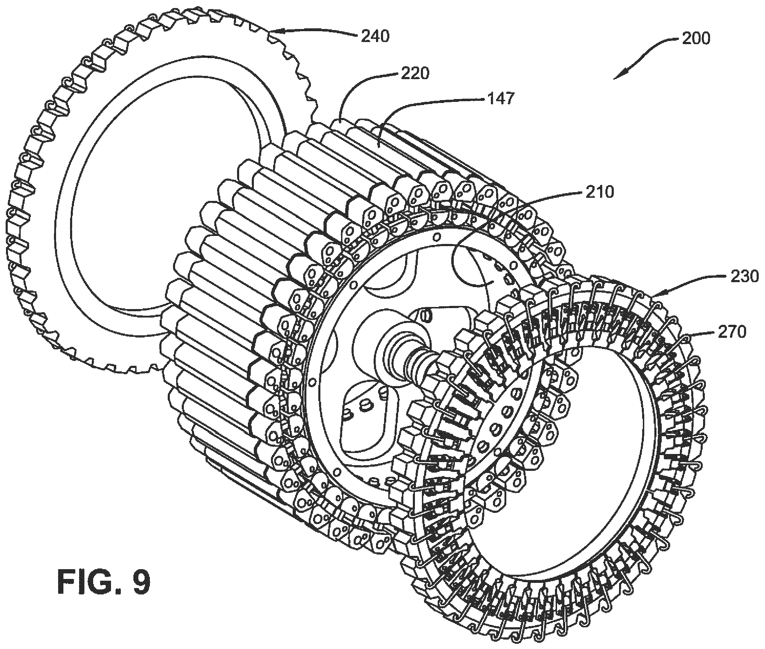

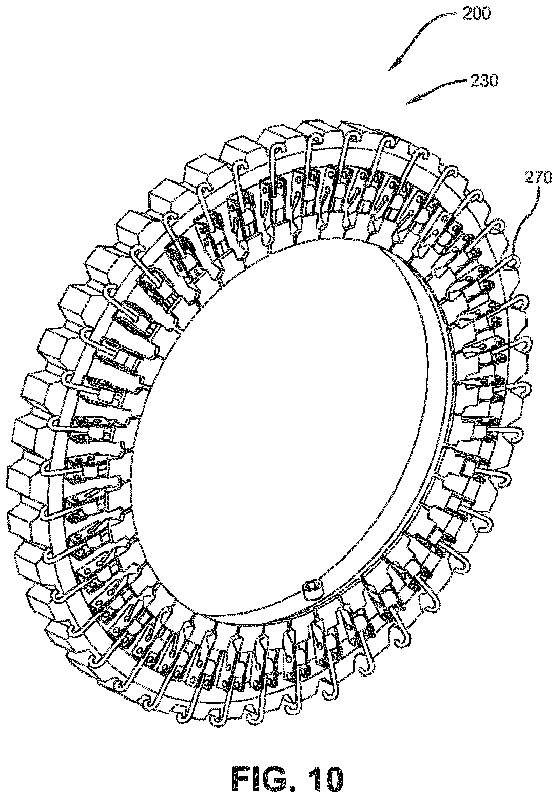

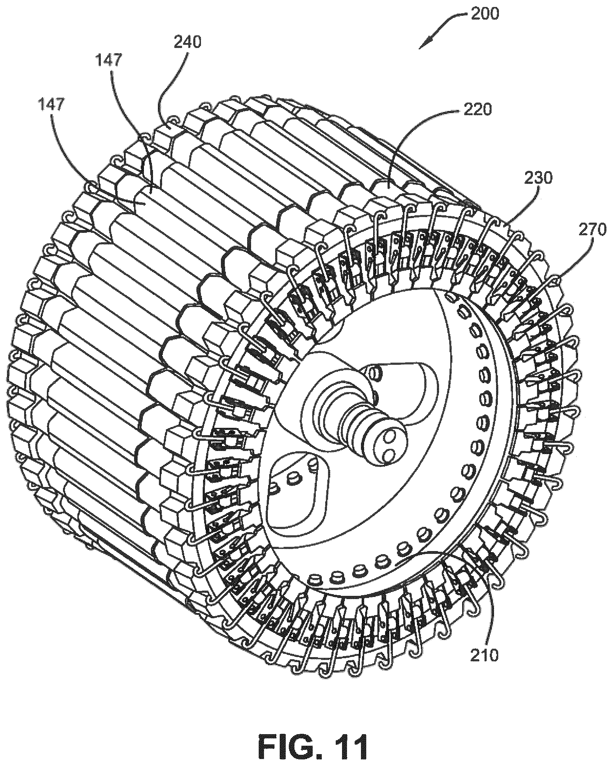

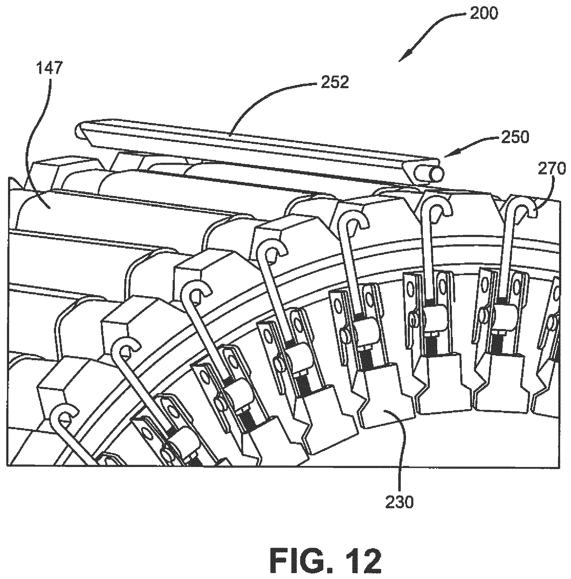

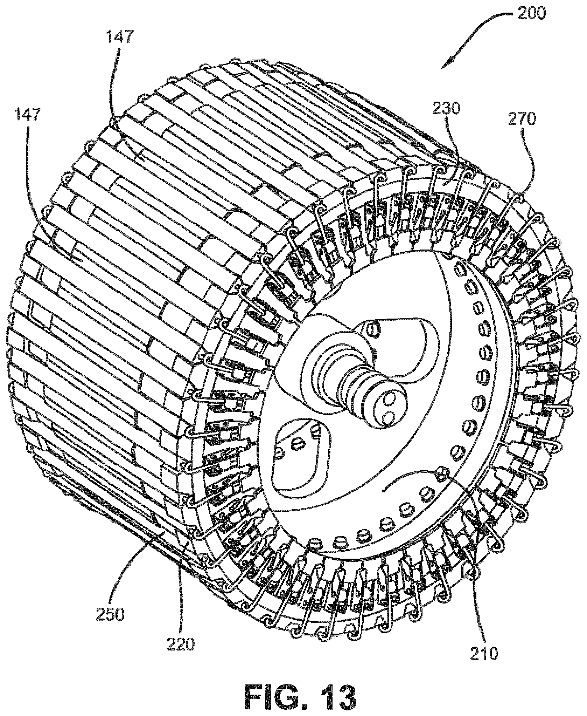

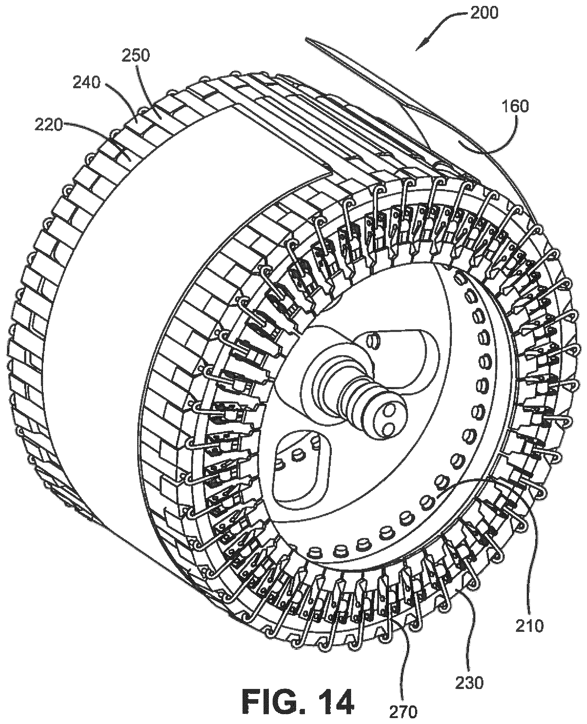

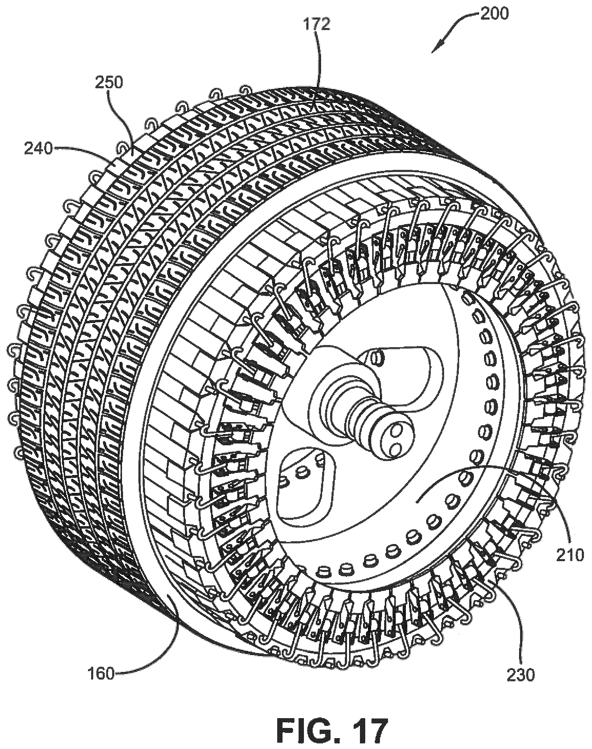

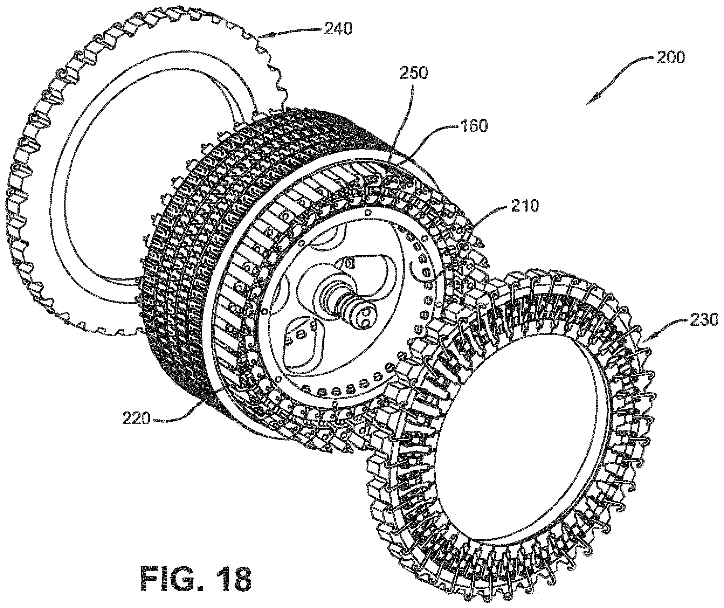

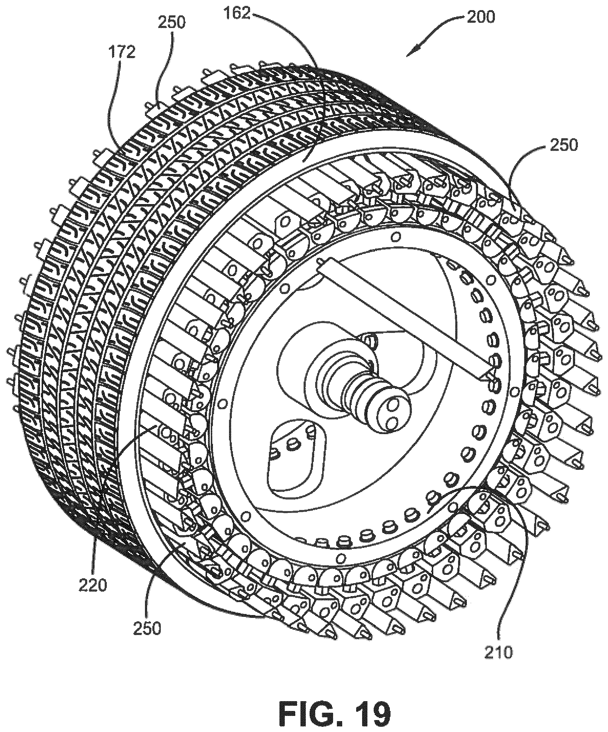

FIGS. 1-22 show a system 200 in accordance with the present invention for curing and manufacturing partially cured pneumatic and/or non-pneumatic tire assemblies 140. The system 200 includes an annular hub member 210 slid into a corresponding annular, radially inner surface 142 of the tire assembly 140, a plurality of spacer members 220 for maintaining corresponding uniform cavity dimensions in the tire assembly 140 by fastening the spacer members 220 to the hub member 210 with flap members 147 of the tire assembly 140 enclosing a radially outermost surface 222 of each of the spacer members 220, first and second curing platens 230, 240 for axially securing the hub member 210 and spacer members 220 relative to each other, and a plurality of preferably triangular inserts 250 for creating a smooth, uniform outer cylindrical surface formed by a radially outer surface 252 of each triangular insert 250 and each of the flap members 147 of the tire assembly 140 positioned by the radially outermost surfaces 222 of the spacer members 220. The curing platens 230, 240 may also have spring hook members 270 for maintaining alignment with the spacer members 220 and the remaining parts of the assembly 200.

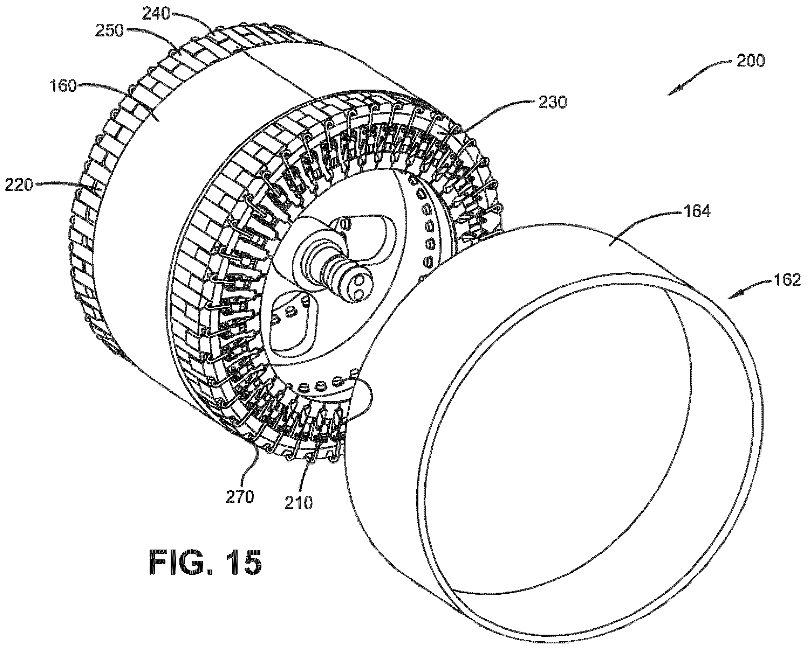

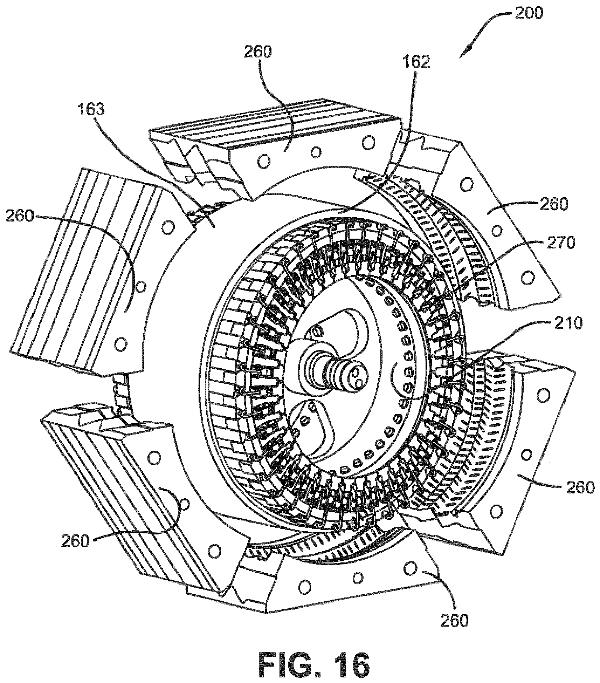

An inner annular shear band 160 and an outer annular tread member 162 of the tire assembly 140 may be serially placed circumferentially around the uniform outer cylindrical surface 147, 252 and affixed at least temporarily thereto and to each other 160, 162. This may be accomplished by building up layers 160, 162 around the assembly 200 similar to a conventional tire building method (not shown) or by forming a complete annular band structure from the shear band 160 and the tread member 162 (FIG. 15). A plurality of mold members 260 (six shown in FIG. 16) may be placed circumferentially around a radially outer surface 163 of the tread member 162. The mold members 260 have radially inner surfaces 262 for together forming a tread shaped outer surface in the outer surface 163 of the tread member 162.

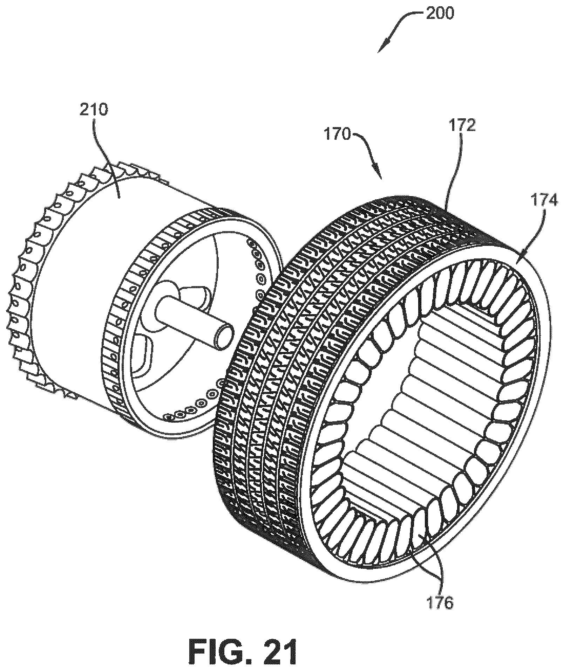

The spacer members 220, curing platens 230, 240, triangular inserts 250, and mold members 260 may be heated in order to cure form the flap members 147, shear band 160, and tread member 162 (e.g., uncured parts of the tire assembly 140) into a molded integral part of a complete, cured tire assembly 170 having an appropriate tread 172 (FIG. 21). Once curing is complete, the mold members 260 are radially removed from around the complete tire assembly 170, the curing platens 230, 240 are axially removed from the hub member 210, and the spacer members 220 and inserts 250 are axially withdrawn from the tire assembly 170 to reveal stable cavities 176 within a spoke structure 174 of the mount-ready tire assembly 170.

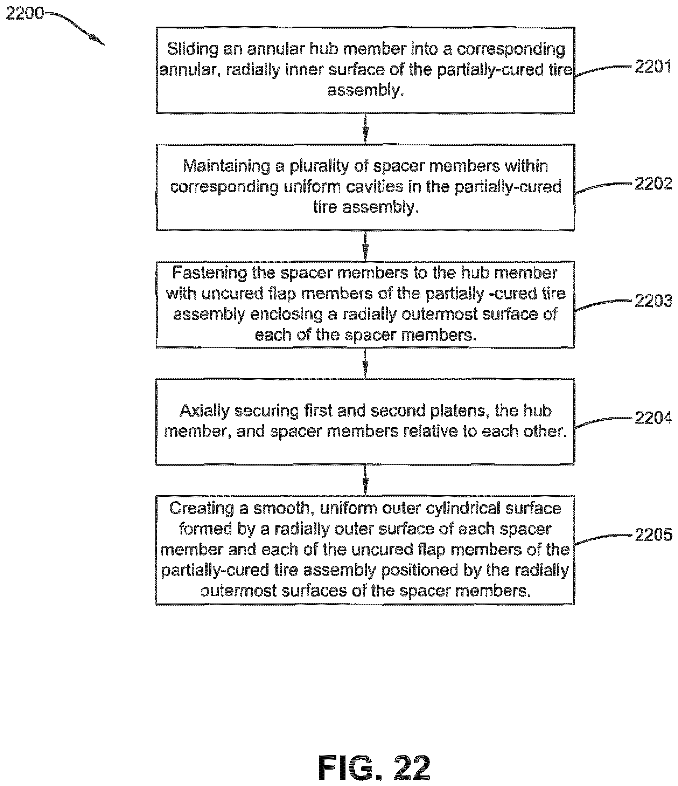

As shown in the FIG. 22, a method 2200, in accordance with the present invention, cures and manufactures a partially cured tire assembly 140 into a completed, "ready-to-install", completely cured tire assembly 170. The method 2200 includes: a first step 2201 of sliding an annular hub member 210 into a corresponding annular, radially inner surface 142 of the partially-cured tire assembly 140; a second step 2202 of maintaining a plurality of spacer members 220 within corresponding uniform cavity dimensions in the partially-cured tire assembly 140; a third step 2203 of fastening the spacer members 220 to the hub member 210 with flap members 147 of the partially-cured tire assembly 140 enclosing a radially outermost surface 222 of each of the spacer members 220; a fourth step 220 of axially securing first and second curing platens 230, 240, the hub member 210, and spacer members 220 relative to each other; a fifth step 2205 of utilizing a plurality of triangular inserts 250 for creating a smooth, uniform outer cylindrical surface formed by a radially outer surface 252 of each spacer member 250 and each of the flap members 147 of the partially-cured tire assembly 140 positioned by the radially outermost surfaces 222 of the spacer members 220; a sixth step 2206 of serially placing an uncured inner annular shear band 160 and an uncured outer annular tread member 162 of the partially-cured tire assembly 140 circumferentially around the uniform outer cylindrical surface 147, 252; a seventh step 2207 of affixing at least temporarily the uncured inner annular shear band 160 and the uncured outer annular tread member 162 of the partially-cured tire assembly 140 to each other 160, 162; an eighth step 2208 of placing a plurality of mold members 260 circumferentially around a radially outer surface 163 of the tread member 162; and a ninth step 2209 of forming a tread shaped outer surface in the outer surface 163 of the tread member 162 by radially inner surfaces 262 of the mold members.

The method 2200 further includes a tenth step 2210 of heating (e.g., by a hot liquid, steam, electricity, etc.) the spacer members 220, curing platens 230, 240, triangular inserts 250, and mold members 260 in order to cure/form the flap members 147, shear band 160, and tread member 162 (e.g., uncured parts of the partially-cured tire assembly 140) into a molded integral part of a complete, cured tire assembly 170 having an appropriate tread 172; an eleventh step 2211 of radially removing the mold members 260 from around the complete, fully-cured tire assembly 170; a twelfth step 2212 of axially removing the curing platens 230, 240 from the hub member 210; and a thirteenth step 2213 of axially withdrawing the spacer members 220 and inserts 250 from the fully-cured tire assembly 170 to reveal stable cavities 176 within a spoke structure 174 of the rim-mountable, fully-cured tire assembly 170.

## Claims

1. A system for curing and manufacturing a partially cured tire assembly (140), the system (200) comprising:
an annular hub member (210) slid into a corresponding annular, radially inner surface (142) of the partially cured tire assembly (140);
a plurality of elongate spacer members (220) for maintaining corresponding uniform cavity dimensions in the partially cured tire assembly tire assembly (140) by fastening the spacer members (220) to the hub member (210) with flap members (147) of the partially cured tire assembly (140) thereby enclosing a radially outermost surface (222) of each of the spacer members (220);
a first annular curing platen (230) for axially securing the hub member (210) and spacer members (220) relative to each other;
a second annular curing platen (240) for axially securing the hub member (210) and spacer members (220) relative to each other; and
a plurality of elongate inserts (250) for creating a smooth, uniform outer cylindrical surface formed by a radially outer surface (252) of each insert (250) and flap members (147) of the partially cured tire assembly (140) positioned by the radially outermost surfaces (222) of the spacer members (220).

2. The system as set forth in claim 1 further including a plurality of mold members (260) placed circumferentially around a radially outer surface of a tread member (162).

3. The system as set forth in claim 2 wherein radially inner surfaces of the mold members (260) together form a tread shaped outer surface in the radially outer surface of the tread member (162).

4. The system as set forth in at least one of the previous claims wherein the spacer members (220), the first and second curing platens (230, 244), the triangular inserts (250), and the mold members (260) are arranged such that they can be heated in order to cure form the flap members (147), a shear band (160), and a tread member (162) into a molded integral part of a complete, cured tire assembly (170).

5. The system as set forth in at least one of the previous claims wherein the elongate inserts (250) have a triangular cross-section.

6. The system as set forth in at least one of the previous claims wherein the mold members (260) are radially removable from around the complete, cured tire assembly (170); and/or wherein the curing platens (230, 240) are axially removable from the hub member (210), the elongate spacer members (220), and the elongate inserts (250).

7. The system as set forth in at least one of the previous claims wherein the curing platens (230, 240) are configured for being heated by a hot liquid; and/or wherein the elongate spacer members (220) are configured for being heated by steam; and/or wherein the elongate inserts (250) are configured for being heated by electricity.

8. A method for completing the curing of a partially cured tire assembly (140), the method comprising the steps of:
sliding an annular hub member (210) into a corresponding annular, radially inner surface of the partially cured tire assembly (140);
maintaining a plurality of spacer members (220) within corresponding uniform cavities in the partially cured tire assembly (140);
fastening the spacer members (220) to the hub member (210) with uncured flap members (147) of the partially cured tire assembly (140) enclosing a radially outermost surface of each of the spacer members (220);
axially securing first and second curing platens (230, 240), the hub member (210), and spacer members (220) relative to each other; and
creating a smooth, uniform outer cylindrical surface formed by a radially outer surface of each spacer member (220) and each of the uncured flap members (147) of the partially cured tire assembly (140) positioned by the radially outermost surfaces of the spacer members (220).

9. The method as set forth in claim 8 further including a step of serially placing an uncured inner annular shear band (160) and an uncured outer annular tread member (162) of the partially cured tire assembly (140) circumferentially around the uniform outer cylindrical surface.

10. The method as set forth in claim 9 further including a step of affixing the uncured inner annular shear band (160) and the uncured outer annular tread member (162) of the partially cured tire assembly (140) to each other and/or further including a step of placing a plurality of mold members (260) circumferentially around a radially outer surface of the tread member (162).

11. The method as set forth in claim 10 further including a step of forming a tread shaped outer surface in the outer surface of the tread member (162) by radially inner surfaces of the mold members (260).

12. The method as set forth in at least one of the previous claims 8 to 12 further including a step of heating the spacer members (220), curing platens (230, 240), elongate inserts (250), and mold members (260) in order to form the flap members (147), shear band (160), and tread member (162) into a fully cured tire assembly (170).

13. The method as set forth in claim 12 further including a step of radially removing the mold members (260) from around the fully cured tire assembly (170) and/or further including a step of axially removing the curing platens (230, 240) from the hub member (210).

14. The method as set forth in claim 12 or 13 further including a step of axially withdrawing the spacer members (220) and inserts (250) from the fully cured tire assembly (170) to reveal stable cavities within a spoke structure (174) of a rim-mountable, fully cured tire assembly (170).

15. The method as set forth in claim 12 wherein the heating step includes using a heating medium from the group consisting of a hot liquid, steam, and electricity.

## Patentansprüche

1. System zum Vulkanisieren und Herstellen einer teilweise vulkanisierten Reifenanordnung (140), wobei das System das Folgende umfasst:
ein ringförmiges, als Nabe dienendes Element (210), das in eine entsprechende ringförmige, in der radialen Richtung innere Oberfläche (142) der teilweise vulkanisierten Reifenanordnung (140) eingeschoben wurde;
eine Anzahl länglicher Abstandselemente (220), die dazu bestimmt sind, entsprechende gleichmäßige Hohlraumabmessungen in der teilweise vulkanisierten Reifenanordnung (140) durch eine Befestigung der Abstandselemente (220) an dem als Nabe dienenden Element (210) mit Laschenelementen (147) der teilweise vulkanisierten Reifenanordnung (140) aufrechtzuerhalten, um so eine radial äußerste Oberfläche (222) der Abstandselemente (220) zu umschließen;
eine erste ringförmige Vulkanisierplatte (230) zum axialen Befestigen des als Nabe dienenden Elementes (210) und der Abstandselemente (220) relativ zu einander;
eine zweite ringförmige Vulkanisierplatte (240) zum axialen Befestigen des als Nabe dienenden Elementes (210) und der Abstandselemente (220) relativ zu einander;
eine Anzahl länglicher Einsätze (250), die dazu bestimmt sind, eine gleichmäßig glatte äußere zylindrische Oberfläche zu erzeugen, die durch eine in der radialen Richtung äußeren Oberfläche jedes Einsatzes (250) und von Laschenelementen (147) der teilweise vulkanisierten Reifenanordnung (140) ausgebildet wird, die über die radial äußersten Oberflächen (222) der Abstandselemente (220) positioniert ist.

2. System wie in Anspruch 1 angegeben, das ferner eine Anzahl von Formelementen (260) umfasst, die in der Umfangsrichtung um eine in der radialen Richtung äußeren Oberfläche eines als Lauffläche dienenden Elements (162) angebracht sind.

3. System wie in Anspruch 2 angegeben, wobei radial innere Oberflächen der Formelemente (260) gemeinsam eine äußere Oberfläche zum Erzielen einer Lauffläche in der radial äußeren Oberfläche des als Lauffläche dienenden Elements (162) bilden.

4. System wie in mindestens einem der vorhergehenden Ansprüche angegeben, wobei die Abstandselemente (220), die erste und zweite Vulkanisierplatte (230, 244), die dreieckigen Einsätze (250) und die Formelemente (260) so angebracht sind, dass sie erwärmt werden können, um die Laschenelemente (147), das Scherband (160) und das als Lauffläche dienende Element (162) in ein einteiliges Element einer vollständigen vulkanisierten Reifenanordnung (170) heißzuformen.

5. System wie in mindestens einem der vorhergehenden Ansprüche angegeben, wobei die länglichen Einsätze (250) im Querschnitt eine dreieckige Form besitzen.

6. System wie in mindestens einem der vorhergehenden Ansprüche angegeben, wobei die Formelemente (260) von einer Stelle um die vollständige vulkanisierte Reifenanordnung (170) herum in der radialen Richtung beweglich sind; und/oder wobei die Vulkanisierplatten (230, 240) vom dem als Nabe dienenden Element (210), von den länglichen Abstandselementen (220) und von den länglichen Einsätzen (250) entfernt werden können.

7. System wie in mindestens einem der vorhergehenden Ansprüche angegeben, wobei die Vulkanisierplatten (230, 240) so ausgebildet sind, dass sie durch eine heiße Flüssigkeit erwärmt werden können; und/oder wobei die länglichen Abstandelemente (220) so ausgebildet sind, dass sie mit Dampf erwärmt werden können; und/oder wobei die länglichen Einsätze (250) so ausgebildet sind, dass sie elektrisch erwärmt werden können.

8. Verfahren zur Vervollständigung der Vulkanisation einer teilweise vulkanisierten Reifenanordnung (140), wobei das Verfahren die folgenden Schritte umfasst, bei denen:
ein ringförmiges, als Nabe dienendes Element (210) in eine entsprechende ringförmige in der radialen Richtung innere Oberfläche (142) der teilweise vulkanisierten Reifenanordnung (140) eingeschoben wird;
eine Anzahl von Abstandselementen (220) in entsprechenden gleichmäßigen Hohlräumen in der teilweise vulkanisierten Reifenanordnung (140) gehalten werden;
die Abstandselemente (220) an dem als Nabe dienenden Element (210) mit unvulkanisierten Laschenelementen (147) der teilweise vulkanisierten Reifenanordnung (140) befestigt werden, um auf diese Weise eine in der radialen Richtung äußerste Oberfläche jedes der Abstandselemente (220) einzuschließen;
erste und zweite Vulkanisierplatten (230, 240), das als Nabe dienende Element (210) und die Abstandselemente (220) axial relativ zueinander befestigt werden; und
eine glatte, gleichmäßige äußere zylindrische Oberfläche durch eine in der radialen Richtung äußere Oberfläche jedes Abstandelementes (220) und jedes der unvulkanisierten Laschenelemente (147) der teilweise vulkanisierten Reifenanordnung (140) ausgebildet wird, die über die radial äußersten Oberflächen der Abstandselemente (220) positioniert ist.

9. Verfahren wie in Anspruch 8 angegeben, das ferner einen Schritt umfasst, bei dem ein unvulkanisiertes ringförmiges inneres Scherband (160) und ein unvulkanisiertes ringförmiges äußeres Scherband (162) der teilweise vulkanisierten Reifenanordnung (140) in Umfangsrichtung um die äußere einheitliche zylindrische Oberfläche herum angebracht wird.

10. Verfahren wie in Anspruch 9 angegeben, das ferner einen Schritt umfasst, bei dem das unvulkanisierte ringförmige innere Scherband (160) und das unvulkanisierte ringförmige äußere Scherband (162) der teilweise vulkanisierten Reifenanordnung (140) aneinander befestigt werden, und/oder das ferner einen Schritt umfasst, bei dem eine Anzahl von Formelementen (260) in der Umfangsrichtung um eine in der radialen Richtung äußere Oberfläche des als Lauffläche dienenden Elements (162) angebracht werden.

11. Verfahren wie in Anspruch 10 angegeben, das ferner einen Schritt umfasst, bei dem in der Außenfläche des als Lauffläche dienenden Elements (162) eine Außenfläche gebildet wird, die eine Form einer Lauffläche besitzt, und zwar mittels in der radialen Richtung innen liegender Oberflächen der Formelemente (260).

12. Verfahren wie in einem der vorhergehenden Ansprüche 8 bis 11 angegeben, das ferner einen Schritt umfasst, bei dem die Abstandselemente (220), die Vulkanisierplatten (230, 240), die länglichen Einsätze (250) und die Formteile (260) erwärmt werden, um die Laschenelemente (147), das Scherband (160) und das als Lauffläche dienende Element (162) in eine Reifenanordnung (170) umzuwandeln, die vollständig vulkanisiert ist.

13. Verfahren wie in Anspruch 12 angegeben, das ferner einen Schritt umfasst, bei dem die Formelemente (260) von der Stelle um die vollständige vulkanisierte Reifenanordnung (170) entfernt werden; und/oder das ferner einen Schritt umfasst, bei dem die Vulkanisierplatten (230, 240) in der radialen Richtung von dem als Nabe dienenden Element (210) weg bewegt werden.

14. Verfahren wie in Anspruch 12 oder 13 angegeben, das ferner einen Schritt umfasst, bei dem die Abstandselemente (220) und die Einsätze (250) aus der vollständig vulkanisierten Reifenanordnung (170) axial zurückgezogen werden, um stabile Hohlräume innerhalb einer Speichenstruktur (174) einer vollständig vulkanisierten Reifenanordnung (170) freizulegen, die an einer Felge angebracht werden kann.

15. Verfahren wie in Anspruch 12 angegeben, wobei der Heizschritt die Verwendung eines Heizmittels umfasst, das aus der Gruppe ausgewählt ist, die eine heiße Flüssigkeit, Dampf und Elektrizität umfasst.

## Revendications

1. Système destiné à la vulcanisation et à la fabrication d'un assemblage de bandage pneumatique partiellement vulcanisé (140) ; dans lequel le système comprend :
un élément de forme annulaire faisant office de moyeu (210) qui a été inséré par glissement dans une surface annulaire correspondante (142), interne dans la direction radiale, de l'assemblage de bandage pneumatique partiellement vulcanisé (140) ;
un certain nombre d'éléments allongés sous la forme d'entretoises (220), qui sont destinés à maintenir des dimensions de cavités uniformes correspondantes dans l'assemblage de bandage pneumatique partiellement vulcanisé (140) par l'intermédiaire d'une fixation des éléments sous la forme d'entretoises (220) à l'élément faisant office de moyeu (210), d'une manière telle que des éléments sous la forme de rabats (147), de l'assemblage de bandage pneumatique partiellement vulcanisé (140), renferment une surface (222) de chacun des éléments sous la forme d'entretoises (220), la plus externe dans la direction radiale ;
une première plaque de vulcanisation de forme annulaire (230) qui est destinée à fixer de manière réciproque, dans la direction axiale, l'élément faisant office de moyeu (210) et les éléments sous la forme d'entretoises (220) ;
une deuxième plaque de vulcanisation de forme annulaire (230) qui est destinée à fixer de manière réciproque, dans la direction axiale, l'élément faisant office de moyeu (210) et les éléments sous la forme d'entretoises (220) ; et
un certain nombre d'inserts de forme allongée (250) qui sont destinés à créer une surface cylindrique externe lisse uniforme formée par une surface (252), externe dans la direction radiale, de chaque insert (250), et par des éléments sous la forme de rabats (147), de l'assemblage de bandage pneumatique partiellement vulcanisé (140), positionnés par l'intermédiaire des surfaces (222), les plus externes dans la direction radiale, des éléments sous la forme d'entretoises (220).

2. Système tel qu'indiqué à la revendication 1, qui englobe en outre un certain nombre d'éléments de moule (260) qui sont disposés, dans la direction circonférentielle, autour d'une surface, externe dans la direction radiale, d'un élément faisant office de bande de roulement (162).

3. Système tel qu'indiqué à la revendication 2, dans lequel des surfaces des éléments de moule (260), internes dans la direction radiale, forment ensemble une surface externe configurée pour obtenir une bande de roulement, dans la surface, externe dans la direction radiale, de l'élément faisant office de bande de roulement (162).

4. Système tel qu'indiqué dans au moins une des revendications précédentes, dans lequel les éléments sous la forme d'entretoises (220), les première et deuxième plaques de vulcanisation (230, 240), les inserts de forme triangulaire (250) et les éléments de moule (260) sont disposés de manière à pouvoir être chauffés dans le but de transformer par vulcanisation les éléments sous la forme de rabats (147), une bande de cisaillement (160) et un élément faisant office de bande de roulement (162) en un élément moulé en une seule pièce d'un assemblage de bandage pneumatique complet (170) qui a été vulcanisé.

5. Système tel qu'indiqué dans au moins une des revendications précédentes, dans lequel les inserts de forme allongée (250) possèdent une section transversale de forme triangulaire.

6. Système tel qu'indiqué dans au moins une des revendications précédentes, dans lequel les éléments de moule (260) sont mobiles dans la direction radiale à partir d'un endroit situé autour de l'assemblage de bandage pneumatique vulcanisé complet (170) ; et/ou dans lequel les plaques de vulcanisation (230, 240) peuvent être éloignées, dans la direction radiale, de l'élément faisant office de moyeu (210), des éléments allongés sous la forme d'entretoises (220) et des inserts de forme allongée (250).

7. Système tel qu'indiqué dans au moins une des revendications précédentes, dans lequel les plaques de vulcanisation (230, 240) sont configurées pour être chauffées par un liquide chaud ; et/ou dans lequel les éléments allongés sous la forme d'entretoises (220) sont configurés pour être chauffés à la vapeur ; et/ou dans lequel les inserts de forme allongée (250) sont configurés pour être chauffés par l'électricité.

8. Procédé destiné à l'achèvement de la vulcanisation d'un assemblage de bandage pneumatique partiellement vulcanisé (140) ; dans lequel le procédé comprend les étapes au cours desquelles :
on insère un élément de forme annulaire faisant office de moyeu (210) par glissement dans une surface annulaire correspondante (142), interne dans la direction radiale, de l'assemblage de bandage pneumatique partiellement vulcanisé (140) ;
on maintient un certain nombre d'éléments allongés sous la forme d'entretoises (220) au sein de cavités uniformes correspondantes dans l'assemblage de bandage pneumatique partiellement vulcanisé (140) ;
on fixe les éléments sous la forme d'entretoises (220) à l'élément faisant office de moyeu (210) avec des éléments non vulcanisés sous la forme de rabats (147), de l'assemblage de bandage pneumatique partiellement vulcanisé (140), pour de cette manière renfermer une surface, la plus externe dans la direction radiale, de chacun des éléments sous la forme d'entretoises (220) ;
on fixe, de manière réciproque, dans la direction axiale, une première et une deuxième plaque de vulcanisation (230, 240), l'élément faisant office de moyeu (210) et les éléments sous la forme d'entretoises (220) ; et
on crée une surface cylindrique externe lisse uniforme par l'intermédiaire d'une surface, externe dans la direction radiale, de chaque insert (250) et de chacun des éléments non vulcanisés sous la forme de rabats (147), de l'assemblage de bandage pneumatique partiellement vulcanisé (140), positionnés par l'intermédiaire des surfaces (222), les plus externes dans la direction radiale, des éléments sous la forme d'entretoises (220).

9. Procédé tel qu'indiqué à la revendication 8, qui englobe en outre une étape au cours de laquelle on place une bande de cisaillement interne de forme annulaire non vulcanisée (160) et une bande de cisaillement externe de forme annulaire non vulcanisée (162) de l'assemblage de bandage pneumatique partiellement vulcanisé (140), dans la direction circonférentielle autour de la surface cylindrique uniforme externe.

10. Procédé tel qu'indiqué à la revendication 8, qui englobe en outre une étape au cours de laquelle on fixe l'une à l'autre la bande de cisaillement interne de forme annulaire non vulcanisée (160) et la bande de cisaillement externe de forme annulaire non vulcanisée (162) de l'assemblage de bandage pneumatique partiellement vulcanisé (140), et/ou qui englobe en outre une étape au cours de laquelle on place un certain nombre d'éléments de moule (260) dans la direction circonférentielle autour d'une surface, externe dans la direction radiale, de l'élément faisant office de bande de roulement (162).

11. Procédé tel qu'indiqué à la revendication 10, qui englobe en outre une étape au cours de laquelle on forme, dans la surface externe de l'élément faisant office de bande de roulement (162), une surface externe qui possède une configuration en forme de bande de roulement, par l'intermédiaire de surfaces, internes dans la direction radiale, des éléments de moule (260).

12. Procédé tel qu'indiqué dans l'une quelconque des revendications précédentes 8 à 11, qui englobe en outre une étape au cours de laquelle on chauffe les éléments sous la forme d'entretoises (220), les plaques de vulcanisation (230, 240), les inserts de forme allongée (250) et les éléments de moule (260) dans le but de transformer les éléments sous la forme de rabats (147), la bande de cisaillement (160) et l'élément faisant office de bande de roulement (162) en un assemblage de bandage pneumatique (170) qui a été complètement vulcanisé.

13. Procédé tel qu'indiqué à la revendication 12, qui englobe en outre une étape au cours de laquelle on retire les éléments de moule (260) de l'endroit situé autour de l'assemblage de bandage pneumatique vulcanisé complet (170) ; et/ou qui englobe en outre une étape au cours de laquelle on éloigne les plaques de vulcanisation (230, 240) dans la direction radiale, de l'élément faisant office de moyeu (210).

14. Procédé tel qu'indiqué à la revendication 12 ou 13, qui englobe en outre une étape au cours de laquelle on enlève, de l'assemblage de bandage pneumatique (170) qui a été complètement vulcanisé, les éléments sous la forme d'entretoises (220) et les inserts (250) afin de mettre en évidence des cavités stables au sein d'une structure de rayon (174) d'un assemblage de bandage pneumatique complètement vulcanisé (170), qui peut être monté sur une jante.

15. Procédé tel qu'indiqué à la revendication 12, dans lequel l'étape de chauffage englobe le fait d'utiliser un moyen de chauffage qui est choisi parmi le groupe qui comprend un liquide chaud, de la vapeur et de l'électricité.
